# EUROPÄISCHE PATENTSCHRIFT

(11) **EP 4 188 762 B1**
(45) Veröffentlichungstag und Bekanntmachung des Hinweises auf die Patenterteilung: **04.03.2026**
(21) Anmeldenummer: 21712438.7
(22) Anmeldetag: 10.03.2021
(51) Int. Cl.: B60T 8/1761, B60T 13/74

(54) **ELEKTROMECHANISCHE BREMSANLAGE**
ELECTROMECHANICAL BRAKING SYSTEM
SYSTÈME DE FREINAGE ÉLECTROMÉCANIQUE

(30) Priorität: 13.03.2020 AT 502142020
(43) Veröffentlichungstag der Anmeldung: 07.06.2023
(73) Patentinhaber: Schwarz, Severin, 1190 Wien (AT)
(72) Erfinder: PUTZ, Michael, 8272 Sebersdorf (AT)
(74) Vertreter: Gibler & Poth Patentanwälte KG
(86) Internationale Anmeldenummer: PCT/EP2021/056064
(87) Internationale Veröffentlichungsnummer: WO 2021/180794

(56) Entgegenhaltungen:
- EP-A1- 3 190 016
- DE-A1- 102015 219 350
- DE-A1- 102017 128 714
- DE-T5- 112015 005 833
- JP-A- 2019 043 268

## Beschreibung

Die Erfindung betrifft eine elektromechanische Bremsenanlage gemäß dem Oberbegriff des Patentanspruches 1.

Fahrzeuge weisen Bremsen bzw. Bremsanlagen auf. Moderne Fahrzeuge weisen in der Regel ein sog. Antiblockiersystem auf.

Aus der DE 11 2015 005 833 T5 ist eine Bremseinrichtung mit einer elektrischen Parkbremsfunktion, wobei die Bremse auch während der Fahrt als Hilfsbremse ausgeführt werden kann, offenbart. Die Bremseinrichtung ist dazu ausgebildet eine stufenweise Zunahme einer Klemmkraft von Bremsbelägen auf einen Scheibenrotor mittels eines Elektromotors durchzuführen.

Aus der JP 2019 043268 A ist eine Bremsanlage, welche ein Blockieren von Rädern bei einem Bremsvorgang verhindern soll, insbesondere, wenn ein Auto leicht beladen oder der Halt auf den Untergrund der Reifen nicht ausreichend gewährleistet ist, bekannt. Dazu wird mittels eines Verfahrens das Gewicht des Fahrzeugs sowie ein Reibungskoeffizient unter Berücksichtigung des Untergrund ermittelt. Wenn ein berechneter Wert unterhalb eines Soll-Werts des Gewichts des Fahrzeuges oder des Reibungskoeffizienten liegt, wird die Bremskraft stufenweise erhöht.

Aus der DE 10 2017 128714 A1 ist eine Bremseinrichtung, wobei die Bremseinrichtung mit unterschiedlichen Druckkraft-Strom-Charakteristika betrieben wird, bekannt. Durch die Verwendung der unterschiedlichen Druckkraft-Strom-Charakteristika werden Haftreibungen und Gleitreibungen bei der Bremse besser berücksichtigt, wobei die Zuverlässigkeit der Bremseinrichtung erhöht wird.

Die sogenannte "time to lock" (TTL) ist ein Vergleichsmaß, für die Zeit in welcher eine Bremse eine Anpresskraft bzw. ein Bremsmoment aufbringt, welche zum Blockieren des Rades ausreichen. Dabei wird eine Belastung des Rades mit der, während eines Bremsvorganges maximal auftretenden Radlast von ca. 70% der Fahrzeuggewichtskraft angenommen. Als Radlast wird die auf das betreffende Rad wirkende Normalkraft in Richtung Untergrund bezeichnet. Werbewirksam werden TTL von z.B. 170 bis 220 ms angegeben, die sich normalerweise auf den zum endgültigen Blockieren nötigen Druck beziehen, wobei meist der Ort der Druckmessung und die Anzahl der dabei angeschlossenen Bremsen nicht genannt werden.

Bremsen mit einer derartigen TTL weisen folgende Nachteile auf:
- hohe Energie- bzw. Leistungsspitzen;
- vorzeitiges Blockieren;
- langer Bremsweg.

Diese Nachteile treten sowohl bei elektromechanischen als auch bei hydraulischen Bremsenanlagen auf.

Aufgabe der Erfindung ist es daher eine elektromechanische Bremsenanlage der eingangs genannten Art anzugeben, mit welcher die genannten Nachteile vermieden werden können, mit welcher mit einem geringen bzw. ausgewogenen Energie- bzw. Leistungsbedarf ohne ausgeprägte Spitzen eine gute bzw. verbesserte Bremswirkung in einem Fahrzeug erreicht werden kann.

Erfindungsgemäß wird dies durch die Merkmale des Patentanspruches 1 erreicht.

Dadurch kann eine Bremse geschaffen werden, bei welcher keine hohen Leistungs- bzw. Energiespitzen auftreten und mit welcher ein geringer Bremsweg bzw. eine kurze Zeit bis zum Stillstand eines Fahrzeugs möglich ist. Es kann daher mit einem geringen bzw. ausgewogenen Energiebedarf eine zumindest gleich gute, insbesondere eine verbesserte, Bremswirkung in einem Fahrzeug erreicht werden.

Nachfolgend werden weitere Vorteile sowie Hintergründe für die Wirkungsweise der gegenständlichen Bremsenanlage dargelegt:
Beim Abbremsen eines Fahrzeugs kommt es zu einer dynamischen Veränderung der Belastung der einzelnen Fahrzeugachsen. Dabei wird die Vorderachse mit fortdauernder Verzögerung immer stärker belastet, während die Belastung der Hinterachse entsprechend sinkt. Dies wird auch als dynamische Radlastverteilung bezeichnet. Ursache dieser dynamischen Radlastverteilung ist das Einfedern der Vorderachsfederung, sowie weiters die Verformungen des Reifens und weitere elastische Verformungen des gesamten Fahrzeuges. Dieser Vorgang dauert bei einem PKW typischerweise ca. 500 ms. Weiters kommt es zu Positionsänderungen von Passagieren bzw. Ladung des betreffenden Fahrzeuges, welche ebenfalls Auswirkungen auf die Belastung der Vorderachse haben können.

Die Verzögerungskraft, welche zwischen einer Straßenoberfläche und einem Rad übertragen werden kann, ist abhängig von der Auflagefläche, dem Reibbeiwert zwischen Fahrbahn und Rad sowie weiters der Normalkraft, welche auch als Radlast bezeichnet wird. Die Reibkraft ist bekanntlich proportional der Normalkraft. Daraus folgt, dass ein stärker belastetes Rad höhere Kräfte übertragen und entsprechend besser bremsen kann, als ein weniger belastetes Rad.

Das möglichst schnelle Aufbringen einer möglichst hohen Anpresskraft, wie dies bei bekannten Bremsen mit einer TTL zwischen 170 und 220 ms der Fall ist, führt dazu, dass diese hohen Anpresskräfte zu einem Zeitpunkt aufgebracht werden, zu welchem die Einfederung noch nicht vollständig erfolgt ist und die Vorderachse noch nicht mit der maximalen Normalkraft belastet ist. Dies führt dazu, dass die betreffenden Vorderräder blockieren und das ABS eingreift, um diesen Zustand zu verhindern. Es kommt zu einem ABS-Absenkungs-Wiederaufbau-Zyklus, was sich negativ auf den Gesamtbremsweg auswirkt.

Die Anpresskraft kann auch als Klemmkraft bezeichnet werden.

Die Betätigungsenergie der Bremse ist das Integral über alle Kraft*Weg und damit wird die Betätigungsleistung immer höher, in je kürzerer Zeit die Betätigung erfolgt.

Bei herkömmlichen Bremsen wie z.B. Elekto-Hydraulischen Bremsen (EHB) oder Elektro-Mechanischen Bremsen (EMB) mit Kugelspindel vergehen typischerweise ca. 70ms bis überhaupt nennenswerte Klemm- bzw. Anpresskraft der Bremsbeläge entsteht. Um in der verbleibenden Zeit von ca. 130 ms (bei einer TTL von 200 ms) die entsprechend hohe bzw. volle Anpresskraft aufzubringen, muss bei einer EHB ein sehr hoher Strom aufgewendet werden. Typisch sind dabei Ströme von ca. 120 A. Dadurch wird das elektrische Bordnetz des betreffenden Fahrzeuges extrem belastet und es kommt zu einem Einbruch der Versorgungsspannung. Je nach Zustand der Batterie können dabei wichtige Steuergeräte, etwa des Antriebsmotors, ausfallen. Bei der EHB selbst kann eine Unterspannung zu einem Reset führen. Sofern aus Redundanzgründen zwei unabhängige Stromversorgungen nötig sind, müssen beide für diese extremen Bedingungen ausgelegt werden, auch wenn jeweils nur eine aktiv ist.

Bei EHBs entsteht die hohe Stromaufnahme auch durch den schlechten hydraulischen Wirkungsgrad (Strömungsverluste) bei schneller Betätigung und weiters durch den Wirkungsgradverlust durch Aufweiten der Leitungen unter Druck.

Ein Teil dieses technisch ungünstigen Verhaltens (ca. 70ms keine nennenswerte Klemmkraft, dann schneller Anstieg bis zum vorzeitigen Blockieren) stammt aus diesen Eigenarten der Hydraulik: Wenn einmal nennenswert Druck aufgebaut wurde, haben die Verformungen schon ein nennenswertes Ausmaß erreicht und die Flüssigkeit strömt, so dass bei entsprechender Stromzufuhr nun eine volle Klemmkraft relativ schnell erreicht werden kann.

Die werbewirksame kurze Betätigungszeit bis zum vorzeitigen Blockieren führt also nicht zum kürzesten Bremsweg sondern nur zu erheblichen Problemen mit sehr hohen Strömen. Indem stattdessen anfangs zwar eine deutliche Anpresskraft erzeugt wird, welche jedoch nicht zu einem Blockieren des betreffenden Rades führt, und die Anpresskraft nachfolgend erhöht wird, ohne dass es zu einem vorzeitigen Blockieren kommt, kann der Bremsweg deutlich reduziert werden. Damit kann der Strombedarf bei starkem Bremsen erheblich gesenkt werden, weil die Klemmenergie auf eine deutlich längere Zeit verteilt wird.

Gemäß einer besonders bevorzugten Weiterbildung ist vorgesehen, dass bereits in den ersten 70 ms signifikante bzw. wirksame Anpresskraft aufgebaut wird. Dies wird insbesondere durch ein nicht-lineares Übersetzungsverhältnis der Betätigungsmechanik ermöglicht.

Mit anderen Worten erfolgt bei der gegenständlichen Bremsenanlage eine erste Phase des Bremsvorgangs mit einer Anpresskraft, welche gering genug ist, um ein Blockieren der Vorderräder auch ohne Eingriff durch das ABS zu vermeiden. Diese Anpresskraft ist jedoch ausreichend hoch um eine starke bis vollständige Einfederung des Fahrzeuges zu verursachen. Erst nach bzw. bei Erreichen einer hohen, insbesondere einer maximalen, Normalkraft an den Vorderrädern wird die Anpresskraft weiter erhöht. Durch die hohe Normalkraft können auch höhere Reibungskräfte übertragen werden, ohne dass es zu einem Blockieren der Räder kommt. Durch diese Art der Bremsensteuerung kann der tatsächliche Bremsvorgang verkürzt werden.

Indem bei der gegenständlichen Bremse nicht innerhalb besonders kurzer Zeit eine maximale Anpresskraft aufgebracht wird, sondern stattdessen eine deutlich geringere Anpresskraft, kommt es nicht zum Auftreten von Energie- bzw. Leistungsspitzen. Beispielsweise ist die mechanische Betätigungsenergie einer konkreten elektromechanischen Bremse zum Erreichen der Kraft entsprechend einer halben Blockier-Anpresskraft ca. 3Ws. Die Betätigungsenergie zum Erreichen der Blockier-Anpresskraft beträgt bei derselben Bremse unter gleichen Bedingungen ca. 10 Ws, wobei die Betätigungsenergie zum Erreichen der maximal möglichen Anpresskraft 34 Ws beträgt.

Besonders bevorzugt ist es, die anfangs kleine Energie, die auch als Klemmenergie bezeichnet wird, in möglichst kurzer Zeit einzubringen, und jede weitere Erhöhung auf eine längere Zeitdauer zu verteilen, wodurch Leistungs- und Strombedarf entsprechend verringert werden, da zum Aufbringen derselben Energie mehr Zeit zur Verfügung steht. Entsprechend gering sind der Strombedarf und die Belastung der elektrischen Anlage durch die gegenständliche Bremsenanlage.

Insbesondere treten bei einer gegenständlichen Bremsanlage dynamische Stromspitzen bzw. ein Einbruch der Quellenspannung nicht oder nur deutlich geringer als beim Stand der Technik auf. Dadurch kann das elektrische Bordnetz eines Fahrzeuges einfacher aufgelegt werden, da es nicht mehr erforderlich ist, hohe Stromspitzen bewältigen zu müssen bzw. keine Sicherung auszulösen. Weiters muss auch weniger Wert auf einen besonders geringen Innenwiderstand der Quelle gelegt werden. Das Fehlen von Stromspitzen vereinfacht weiters auch den Betrieb aller anderen elektrischen Verbraucher.

Die Erfindung betrifft weiters ein Verfahren zum Betreiben einer elektromechanischen Bremsenanlage gemäß dem Oberbegriff des Patentanspruches 10.

Die Erfindung hat daher weiters die Aufgabe ein Verfahren zum Betreiben einer elektromechanischen Bremsenanlage der vorstehend genannten Art anzugeben, mit welchem die eingangs genannten Nachteile vermieden werden können, mit welchem mit einem geringen bzw. ausgewogenen Energie- bzw. Leistungsbedarf ohne ausgeprägte Spitzen eine gute bzw. verbesserte Bremswirkung erreicht werden kann.

Erfindungsgemäß wird dies durch die Merkmale des Patentanspruches 10 erreicht.

Dadurch werden die zum Patentanspruch 1 geltend gemachten Vorteile erreicht.

Die Erfindung betrifft weiters ein Fahrzeug gemäß dem Oberbegriff des Patentanspruches 11.

Die Erfindung hat daher weiters die Aufgabe ein Fahrzeug der vorstehend genannten Art anzugeben, mit welchem die eingangs genannten Nachteile vermieden werden können, mit welchem mit einem geringen bzw. ausgewogenen Energie- bzw. Leistungsbedarf ohne ausgeprägte Spitzen eine gute bzw. verbesserte Bremswirkung erreicht werden kann.

Erfindungsgemäß wird dies durch die Merkmale des Patentanspruches 11 erreicht.

Dadurch werden die zum Patentanspruch 1 geltend gemachten Vorteile erreicht.

Die Erfindung betrifft weiters ein Verfahren zum Bremsen eines Fahrzeuges gemäß dem Oberbegriff des Patentanspruches 15.

Die Erfindung hat daher weiters die Aufgabe ein Verfahren zum Bremsen eines Fahrzeuges der vorstehend genannten Art anzugeben, mit welchem die eingangs genannten Nachteile vermieden werden können, mit welchem mit einem geringen bzw. ausgewogenen Energie- bzw. Leistungsbedarf ohne ausgeprägte Spitzen eine gute bzw. verbesserte Bremswirkung erreicht werden kann.

Erfindungsgemäß wird dies durch die Merkmale des Patentanspruches 15 erreicht.

Dadurch werden die zum Patentanspruch 1 geltend gemachten Vorteile erreicht.

Die Unteransprüche betreffen weitere vorteilhafte Ausgestaltungen der Erfindung.

Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein Blockschaltbild einer gegenständlichen Bremsenanlage;
Fig. 2 ein Kraft-Zeit-Diagramm mit einem schematischen Verlauf der Anpresskraft gemäß einer ersten Ausführungsform einer gegenständlichen Bremsenanlage;
Fig. 3 ein Strom-Zeit-Diagramm mit einem schematischen Verlauf der Stromaufnahme des Elektromotors bei einem Anpresskraftverlauf gemäß Fig. 2;
Fig. 4 ein Kraft-Zeit-Diagramm mit einem schematischen Verlauf der Anpresskraft gemäß einer zweiten Ausführungsform einer gegenständlichen Bremsenanlage; und
Fig. 5 eine schematische Darstellung eines gegenständlichen Fahrzeuges.

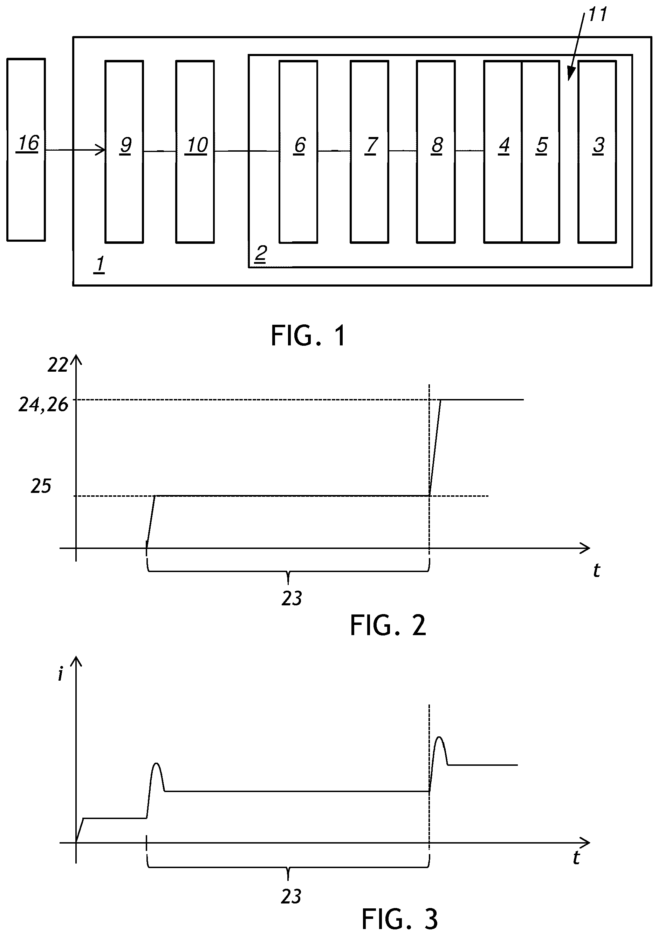

Die Fig. 1 zeigt ein Blockschaltbild einer bevorzugten Ausführungsform einer elektromechanischen Bremsenanlage 1 umfassend wenigstens eine elektromechanische Bremse 2, wobei die Bremse 2
- wenigstens eine Reibfläche 3,
- wenigstens einen Belagsträger 4 mit wenigstens einem Bremsbelag 5, und
- wenigstens einen Elektromotor 6 zum vorgebbaren Bewegen des Belagsträgers 4
aufweist, wobei die Bremsenanlage 1 eine Steuer- und Kontrolleinheit 9 aufweist, welche dazu ausgebildet ist eingangsseitig eine Bremswirkungsanforderung zu empfangen, und den Elektromotor 6 wenigstens mittelbar zum Erreichen einer vorgebbaren Anpresskraft 22 des Bremsbelags 5 auf die Reibfläche 3 anzusteuern, wobei die Steuer- und Kontrolleinheit 9 weiters dazu ausgebildet ist:
- aus der Bremswirkungsanforderung einen Ziel-Hauptanpresskraftwert 26 der Anpresskraft 22 zu ermitteln,
- beginnend mit einem Erstkontakt des Bremsbelags 5 mit der Reibfläche 3 die Anpresskraft 22 auf einen Anfangsanpresskraftwert 25 in einem Bereich zwischen 25 - 60 % des Ziel-Hauptanpresskraftwerts 26 einzustellen,
- nach Ablauf einer ersten Zeitspanne 23 nach dem Erstkontakt die Anpresskraft 22 auf den Ziel-Hauptanpresskraftwert 26 zu erhöhen.

Dadurch kann eine Bremsenanlage 1 geschaffen werden, bei welcher keine hohen Leistungs- bzw. Stromspitzen auftreten und mit welcher ein zumindest gleich langer bzw. geringerer Bremsweg bzw. eine gleiche oder kürzere Zeit bis zum Stillstand eines Fahrzeugs 18 möglich ist, als bei herkömmlichen Bremsanlagen. Es kann daher mit einem geringen bzw. ausgewogenen Leistungsbedarf eine zumindest gleich gute, insbesondere eine verbesserte, Bremswirkung in einem Fahrzeug 18 erreicht werden.

Insbesondere treten bei einer gegenständlichen Bremsanlage 1 dynamische Stromspitzen bzw. ein Einbruch der Quellenspannung nicht bzw. deutlich abgeschwächt auf. Dadurch kann das elektrische Bordnetz eines Fahrzeuges 18 einfacher aufgelegt werden, da es nicht mehr erforderlich ist, hohe Stromspitzen bewältigen zu müssen. Weiters muss auch weniger Wert auf einen besonders geringen Innenwiderstand der Quelle gelegt werden. Das Fehlen von Stromspitzen vereinfacht weiters auch den Betrieb aller anderen elektrischen Verbraucher, da diese nicht für den Betrieb bei großen Spannungseinbrüchen ausgelegt sein müssen.

Die physikalischen Zusammenhänge zum Verständnis der Wirkung der gegenständlichen Bremsenanlage 1 und dem Erzielen der Vorteile sind im Abschnitt vor der Figurenaufzählung ausführlich dargelegt.

Die gegenständliche Erfindung betrifft eine elektromechanische Bremsenanlage 1, welche wenigstens die eigentliche elektromechanische Bremse 2 sowie eine zu deren Betrieb erforderliche Steuer- und Kontrolleinheit 9 umfasst, wobei noch weitere Komponenten, insbesondere Sensoren, Teil der elektromechanischen Bremsenanlage 1 sein können.

Die gegenständliche elektromechanische Bremsenanlage 1 ist dazu vorgesehen eine Relativbewegung zwischen zwei Teilen zu bremsen. Insbesondere ist die gegenständliche Bremsenanlage 1 dazu vorgesehen, wenigstens einen rotierenden Bauteil zu bremsen. Dabei kann es sich an sich um jede Art eines rotierenden Bauteils handeln, wobei die Bremse 2 auch zum Bremsen von linearen Bewegungen vorgesehen sein kann. Als solche kann die gegenständliche Bremsenanlage 1 beispielsweise Teil einer Rolltreppe, eines Aufzuges oder eines Windrades sein. Insbesondere ist die Bremsanlage 1 dazu vorgesehen, in ein, insbesondere ein- oder mehrspuriges, Fahrzeug eingebaut zu werden, bzw. ein Teil eines Fahrzeuges zu sein. Dabei kann es sich um jede Art eines Rad- oder Kettenfahrzeuges handeln. Insbesondere handelt es sich bei dem Fahrzeug um wenigstens ein Fahrzeug ausgewählt aus der Gruppe: Automobil, Flugzeug, Motorrad, KFZ-Anhänger, Traktor, Schienenfahrzeug. Die Bremsenanlage 1 kann dabei beispielsweise zum Bremsen von Antriebsrädern vorgesehen sein, bzw. auch zum Bremsen anderer beweglicher Teile einer Vorrichtung bzw. eines Fahrzeuges. Dabei können nicht nur drehbare Teile gebremst werden, sondern auch linear bewegte Teile.

Eine elektromechanische Bremse 2 kann im gegenständlichen Kontext jede Art einer Bremse 2 sein, bei der die Betätigung der Bremse 2, daher die Bewegung des Bremsbelags 5 in Richtung der Reibfläche 3 beim Bremsen bzw. das Lösen der Bremse 2, durch den Antrieb mittels eines Elektromotors 6 erfolgt. Dabei ist insbesondere vorgesehen, dass die direkt vom Elektromotor 6 erzeugte Bewegung mittels einer Mechanik, der sog. Betätigungsmechanik 7, umgelenkt wird. Eine Bremse 2, bei welcher die eigentliche Betätigung mittels Hydraulik oder Pneumatik erfolgt, wird nicht als elektromechanische Bremse 2 angesehen, auch wenn dabei der Betriebsdruck des verwendeten Fluids mit einer elektrisch angetriebenen Pumpe erzeugt wird, und/oder wenn elektrisch betätigte Ventile verwendet werden.

Bei dem Elektromotor 6 kann es sich um jede Form eines Elektromotors 6 handeln, etwa um einen Linearmotor, eine Rotationsmaschine, einen DC-Motor oder einen AC-Motor usw. Bevorzugt ist vorgesehen, dass der Elektromotor 6 als Rotationsmaschine ausgebildet ist. Besonders bevorzugt ist weiters vorgesehen, dass der Elektromotor 6 als bürstenloser Gleichstrommotor ausgebildet ist. Ein derartiger Elektromotor 6 wird im Englischen auch als BLDC-Motor bezeichnet, wobei BLDC - in an sich bekannter Weise - für Brushless Direct Current steht.

Die elektromechanische Bremsenanlage 1 weist bevorzugt wenigstens einen Regler 10 auf, um den Elektromotor 6 anzusteuern bzw. eine entsprechende Regelung des Elektromotors 6 zu ermöglichen. Der Regler 10 bzw. die Regeleinheit ist elektrisch mit dem Elektromotor 6 verbunden, und beispielsweise umfassend einer Inverterschaltung oder Brückenschaltung ausgebildet. Der Regler 10 kann als jeder beliebige Regler sowie zufolge jeglichen beliebigen Verfahrens ausgebildet sein, sofern der Regler 10 dazu ausgebildet bzw. in der Lage ist zu regeln, und zwar insbesondere eine Position und/oder ein Moment. Der Regler 10 muss selbstverständlich technisch dazu in der Lage sein, den jeweils ausgewählten Elektromotor 6 zu regeln.

Bei der gegenständlich bevorzugten Ausführung des Elektromotors 6 als BLDC-Motor ist bevorzugt vorgesehen, dass der Regler 10 als speziell für BLDC-Motoren ausgebildeter bzw. vorgesehener Regler 10 ausgebildet ist. Solche Regler 10, welche eine Positions-, Moment- und Drehzahlregelung umfassen, sind in dem betreffenden technischen Gebiet der Regelung von BLDC-Motoren bekannt. Insbesondere ist gegenständlich vorgesehen, dass ein derartiger Regler 10 Position, Momentbegrenzung und Drehzahlbegrenzung gleichzeitig an die Steuer- und Kontrolleinheit 9 übergeben.

Weiters kann dabei vorgesehen sein, dass der Regler 10 als Vektorregler ausgebildet ist. Ein Vektorregler wird im Englischen auch als FOC: Field Oriented Control bezeichnet.

Die Energie zur Bremsbetätigung muss auch nicht ausschließlich von einem Elektromotor 6 stammen. So kann z.B. die Bremse 2 aus Sicherheitsgründen von einer oder mehreren Federn betätigt werden und der Elektromotor 6 dient zum Lösen der Bremse 2. Umgekehrt kann auch Federkraft das Betätigen unterstützen. Es gelten alle hier angestellten Überlegungen sinngemäß, wenn eine vorzeichenrichtige Summe aus allen Kräften (z.B. Motorkraft und Federkraft) bzw. Momenten gebildet wird, wobei natürlich alle an gleichen Stellen von Übersetzungen oder unter Berücksichtigung der Übersetzungen vorzeichenrichtig zu summieren sind. Motorleistung bzw. Strom sind dann natürlich unter Berücksichtigung der Gesamtkräfte bzw. Momente zu sehen.

Die elektromechanische Bremse 2 weist wenigstens eine Reibfläche 3 sowie wenigstens einen Bremsbelag 5 zum Zusammenwirken mit der Reibfläche 3 auf. Die Reibfläche 3 kann insbesondere als Bremsscheibe einer Scheibenbremse oder als Bremstrommelfläche bei einer Trommelbremse ausgebildet sein. Weiters kann die Reibfläche in Form einer Schiene ausgebildet sein, etwa wenn eine lineare Bewegung gebremst wird.

Der wenigstens eine Bremsbelag 5 ist auf wenigstens einem Belagsträger 4 befestigt. Bevorzugt sind je Reibfläche 3 mehrere Bremsbeläge 5 je Bremse 2 vorgesehen.

Der wenigstens eine Elektromotor 6 ist bevorzugt mittels einer Betätigungsmechanik 7 mit dem Belagsträger 4 verbunden, um diesen zu bewegen, bzw. ist der Belagsträger 6 an der Betätigungsmechanik 7 gelagert. Beispielsweise kann die Betätigungsmechanik 7 als Teil einer Keilbremse oder einer Kugelspindelbremse oder einer Kugelrampenbremse ausgebildet sein. Weiters kann die Betätigungsmechanik 7 Nocken bzw. Exzenter aufweisen. Die gegenständliche Erfindung kann jedoch unabhängig von einer speziellen Ausgestaltung der Betätigungsmechanik 7 umgesetzt werden.

Die Bremsenanlage 1 weist eine Steuer- und Kontrolleinheit 9 auf, welche dazu vorgesehen und entsprechend ausgebildet ist, eingangsseitig eine Bremswirkungsanforderung zu empfangen, und auf Basis der Bremswirkungsanforderung den Regler 10 des Elektromotors 6 anzusteuern. Hiezu wird ein sog. Bremssteuersignal generieren ausgegeben.

Die Steuer- und Kontrolleinheit 9 ist insbesondere umfassend einem Mikrocontroller und/oder Mikroprozessor ausgebildet, wobei weitere elektronische Bauteile bzw. Baugruppen Teil der Steuer- und Kontrolleinheit 9 sein können. Die Steuer- und Kontrolleinheit 9 kann auch zumindest teilweise als Teil eines programmierbaren Logikbauteils ausgebildet sein. Insbesondere kann die Steuer- und Kontrolleinheit 9 aus mehreren Teilen bzw. Baugruppen bestehen, wobei einzelne Vorgänge bzw. Verarbeitungsschritte von bestimmten Teilen dieser Mehrzahl an Teilen bzw. Baugruppen durchgeführt werden.

Die Steuer- und Kontrolleinheit 9 ist dazu vorgesehen ein, von Seiten eines, menschlichen oder künstlichen, Fahrers bzw. Lenkers eines Fahrzeuges bzw. eines menschlichen oder künstlichen Operateurs einer Maschine an eine Interaktionsschnittstelle 16 des betreffenden Fahrzeuges bzw. der betreffenden Maschine mitgeteiltes Bedürfnis nach Verlangsamung der Geschwindigkeit bzw. Verzögerung in eine entsprechende Betätigung des Elektromotors 6 der Bremse 2 umzusetzen. Die Interaktionsschnittstelle 16 kann beispielsweise ein Sensor am sog. Bremspedal sein, eine nachrichtentechnische Schnittstelle eines Fahrzeugcomputers oder ein Bedienelement an einem Kontrollboard. Eine Eingabeschnittstelle der gegenständlichen Bremsenanlage 1 ist - als Teil eines Fahrzeuges - wenigstens mittelbar mit der Interaktionsschnittstelle 16 des betreffenden Fahrzeugs verbunden.

Die Steuer- und Kontrolleinheit 9 ist dazu ausgebildet aus der Bremswirkungsanforderung einen Ziel-Hauptanpresskraftwert 26 der Anpresskraft 22 zu ermitteln. Bei dem Ziel-Hauptanpresskraftwert 26 handelt es sich um den Wert bzw. Betrag der Anpresskraft 22, welche theoretisch die erforderliche Verzögerung verursacht, welche vom Benutzer über die Interaktionsschnittstelle 16 angefordert wurde. Die Ermittlung des Ziel-Hauptanpresskraftwerts 26 kann mittels einer Berechnungsvorschrift und/oder aus einer Tabelle erfolgen.

Nachdem die Steuer- und Kontrolleinheit 9 den Ziel-Hauptanpresskraftwert 26 ermittelt hat, stellt die Steuer- und Kontrolleinheit 9 sicher, dass sich der Bremsbelag 5 in Anlage mit der Reibfläche 3 befindet oder stellt diesen Zustand her, indem diese eine Bewegung des Belagsträgers 4 zur Überbrückung eines Luftspaltes 11 zwischen Bremsbelag 5 und Reibfläche 3 verursacht.

Die entsprechende Überbrückungsbewegung kann natürlich unterbleiben, wenn bei Eingang der Bremswirkungsanforderung der Bremsbelag 5 bereits an der Reibfläche 3 anliegt und ein entsprechender Erstkontakt bereits stattgefunden hat.

Bevorzugt wird unter Erstkontakt ein Zustand verstanden, in welchem der Bremsbelag 5 bereits an der Reibfläche 3 anliegt jedoch ohne dass dabei eine Anpresskraft 22 aufgebracht wird, bzw. dass die Anpresskraft 22 unter ein Prozent einer maximalen Anpresskraft 22 der betreffenden Bremsenanlage 1 beträgt.

Sofern eine entsprechende Überbrückungsbewegung erforderlich ist, ist bevorzugt vorgesehen, dass der Luftspalt 11 in so kurzer Zeit wie möglich überbrückt wird. Es daher in diesem Zusammenhang bevorzugt vorgesehen, dass die entsprechende Bewegung des Belagsträgers 3 bzw. der Bremsbelags 5 mit einer Beschleunigung im Bereich zwischen 70 - 100% einer Maximal-Beschleunigung des Verbundes aus Belagsträger 4 und Bremsbelag 5 und/oder 70 - 100% einer Maximal-Geschwindigkeit des Verbundes aus Belagsträger 4 und Bremsbelag 5 auszuführen. Dadurch kann in der Praxis bereits in den ersten 70 ms bereits eine nennenswerte Anpresskraft aufgebracht werden.

Die Bremsenanlage 1 weist vorzugsweise eine Betätigungsmechanik 7 auf, an welcher der Belagsträger 4 gelagert ist, und durch welche der Belagsträger 6 mit dem Elektromotor 6 verbunden ist.

Gemäß einer ersten bevorzugten Ausführungsform ist vorgesehen, dass die

Betätigungsmechanik 7 ein nicht lineares Übersetzungsverhältnis aufweist. Dies ist derart zu verstehen, dass die Betätigungsmechanik 7 einen mechanischen Eingang aufweist, welcher mit dem Elektromotor 6 verbunden ist, dass die Betätigungsmechanik 7 einen mechanischen Ausgang aufweist, welcher mit dem Belagsträger 4 verbunden ist, und dass die Betätigungsmechanik 7 derart ausgebildet ist, dass eine Bewegung am Eingang über einen vorgebbar nicht linearen Zusammenhang mit einer Bewegung des Ausgangs zusammenhängt. Mit anderen Worten: eine bestimmte eingangsseitige Verstellung, daher eine mechanische Eingangsgröße, wird nicht mittels eines linearen Zusammenhangs sondern mittels eines nicht linearen Zusammenhanges, auf eine Verstellung bzw. Bewegung des Belagsträgers 4 abgebildet. Das Übersetzungsverhältnis ist daher über die Betätigung veränderlich.

Insbesondere ist eine solche nicht-lineare Betätigungsmechanik 7 derart ausgebildet, dass eine konstante Drehzahl des Elektromotors 6 in eine hohe Wegänderung (Geschwindigkeit) bzw. Wegänderungsrate (Beschleunigung) des Belagsträgers 4 im Luftspalt 11 umgesetzt wird, und die konstante Drehzahl in eine geringe Wegänderung bzw. Wegänderungsrate des Belagsträgers 4 in einem Kontaktbereich des Bremsbelags 5 an der Reibfläche 3 umgesetzt wird, wodurch der Spalt 11 zwischen einer Ruheposition des Bremsbelags 5 und der Reibfläche 3 sehr schnell bzw. mit nur geringer Bewegung des Elektromotors 6 zurückgelegt werden kann.

Insbesondere ist dabei vorgesehen, dass der Elektromotor 6 in einem optimalen Bereich betrieben wird, bei dem auch eine sichere Bremsbetätigung über Toleranzen möglich ist. Weiters ist dabei bevorzugt vorgesehen, dass der Elektromotor 6 im Bereich einer Kontaktposition des Bremsbelags 5 an der Reibfläche 3 derart betrieben wird, dass der Elektromotor 6 in einem Bereich betrieben wird, in welchem dieser seine höchste abzugebende Leistung aufweist.

Ein derartiger nicht linearer Zusammenhang kann beispielsweise mittels wenigstens einer Nocke erreicht werden, welche entsprechend geformt ist. Eine entsprechende Nicht-Linearität ist, bevorzugt in Form einer Übertragungsfunktion bzw. einer Übertragungsmenge, in einer Speichereinheit der Bremsenanlage 1 abgelegt, und steht der Steuer- und Kontrolleinheit 9 zur Verfügung.

Alternativ bzw. zusätzlich zur ersten bevorzugten Ausführungsform ist gemäß einer zweiten bevorzugten Ausführungsform vorgesehen, dass die Steuer- und Kontrolleinheit 9 den Elektromotor 6 zur Überbrückung des Luftspaltes 11 mit hoher Drehzahl betreibt. Die erhöhte Drehzahl kann beispielsweise mittel sog. Feldschwächung oder durch Umschalten der Wicklungen, z.B. Polpaarzahlen am Elektromotor 6 erreicht werden. Dadurch sinkt zwar das abgreifbare Drehmoment, jedoch steigt auch die Drehzahl, wodurch der Spalt 11 schnell überbrückt werden kann. Besonders bevorzugt wird eine nicht lineare Betätigungsmechanik mit einem, zu schnellem drehen fähigem Elektromotor 6 kombiniert.

Sobald der Bremsbelag 5 die Reibfläche kontaktiert hat, stellt die Steuer- und Kontrolleinheit 9 die Anpresskraft 22, mit welcher der Bremsbelag 5 auf die Reibfläche 3 drückt, auf einen Anfangsanpresskraftwert 25 in einem Bereich zwischen 25 - 60 % des Ziel-Hauptanpresskraftwerts 26 ein. Dies ist in Fig. 2 veranschaulicht. Dabei ist insbesondere vorgesehen, dass der Anfangsanpresskraftwert 25 auf einen umso geringeren Prozentwert des Ziel-Hauptanpresskraftwerts 26 eingestellt, je höher der Betrag des Ziel-Hauptanpresskraftwerts 26 ist. Ein hoher Ziel-Hauptanpresskraftwert 26 führt daher dazu, dass der Anfangsanpresskraftwert 25 in Relation zum Ziel-Hauptanpresskraftwert 26 geringer einstellt wird, als bei einem niedereren Ziel-Hauptanpresskraftwert 26. Bei einer Vollbremsung würde daher der Anfangsanpresskraftwert 25 bevorzugt zwischen 25 - 30 % des Ziel-Hauptanpresskraftwerts 26 betragen, während der Anfangsanpresskraftwert 25 bei einem geringen Ziel-Hauptanpresskraftwert 26 50 - 60 % des Ziel-Hauptanpresskraftwerts 26 beträgt.

Die Höhe des Anfangsanpresskraftwerts 25 ist derart gewählt, dass davon ausgegangen werden kann, dass es in der Regel zu keinem Blockieren der Reibfläche 3 am Bremsbelag 5 kommt. Es hat sich gezeigt, dass es bei einer bestimmten bzw. konkreten Bremsenanlage 1 in Zusammenwirken mit einer konkreten, zu bremsenden Vorrichtung möglich ist, konstante Werte für die Anfangsanpresskraft 25 auszuwählen, welche diese Bedingung gewährleisten. Aufgrund der sicherheitstechnischen Leistungsanforderungen an eine Fahrzeugbremse, ergibt sich der angegebene Wertebereich.

Bei der Erhöhung der Anpresskraft 22 kommt es zwar zu einer Erhöhung des Leistungsbedarfs bzw. der Stromaufnahme wie in Fig. 3 dargestellt, allerdings ist die entsprechende Erhöhung sehr moderat, und ohne ausgeprägte Spitze. Insbesondere kommt es zu keinem elektrischen Zustand, der einem Kurzschluss ähnelt. Sofern die Betätigungsmechanik 7 ein nicht lineares Übersetzungsverhältnis aufweist, kann dessen Verlauf auch in Hinblick auf die Verringerung bzw. Minimierung von Leistungs- bzw. Stromspitzen ausgebildet werden.

Es ist bevorzugt vorgesehen, den Anfangsanpresskraftwert 25 möglichst schnell zu erreichen. Indem der Luftspalt möglichst schnell überbrückt wird und danach auch der Anfangsanpresskraftwert 25 in kurzer Zeit erreicht wird, kann sehr bald nach Eingang der Bremswirkungsanforderung tatsächlich eine Bremswirkung erbracht werden. Da sich ein Fahrzeug 18 in diesem Zustand nach wie vor mit der aktuellen und bislang ungebremsten Geschwindigkeit bewegt, hat die nun anliegende Anpresskraft 22 eine hohe Wirkung, welche neben einer Verringerung der Relativgeschwindigkeit vor allem ein Einfedern des Fahrzeuges 18 zur Folge hat. Das möglichst frühe Einsetzen der ersten Bremswirkung kann besonders durch das nicht lineare Übersetzungsverhältnis der Betätigungsmechanik 7 erreicht werden.

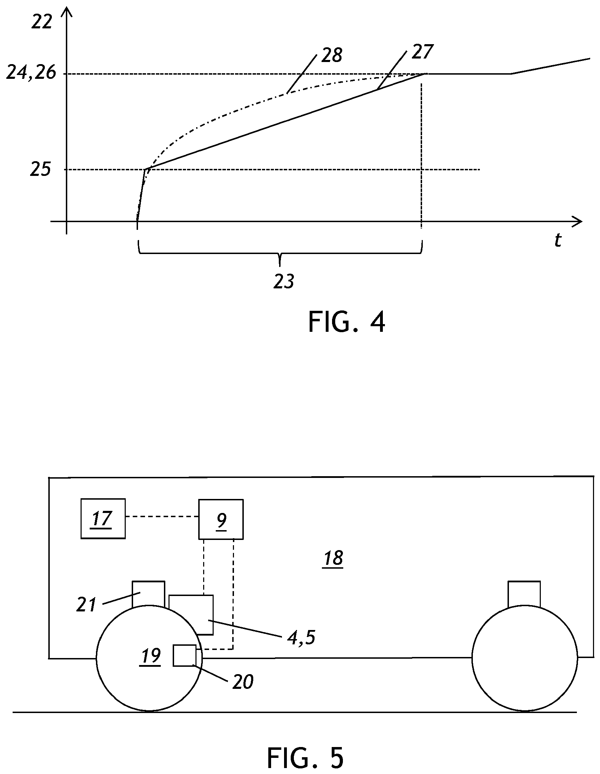

Nach Einstellen der Anpresskraft 22 auf den Anfangsanpresskraftwert 25 kann die Anpresskraft 22 entweder für eine erste Zeitspanne bzw. Zeitdauer 23 auf diesem Wert belassen werden, wie dies in Fig. 2 dargestellt ist, oder aber die Anpresskraft 22 wird innerhalb der ersten Zeitspanne 23 auf einen Wert zwischen 40 und 55% des Ziel-Hauptanpresskraftwerts 26 erhöht, oder auf den Ziel-Hauptanpresskraftwert 26 selbst. Eine derartige Erhöhung ist möglich, da im Zuge des Einfederungsvorganges die Normalkraft am Vorderrad 19 steigt, und damit auch das Bremsmoment, welches ohne blockieren übertragbar ist. Durch die moderate Erhöhung der Anpresskraft 22 in diesem Zeitfenster kann der Bremsweg weiter verkürzt werden. In Fig. 4 sind zwei unterschiedliche Verläufe für entsprechende Erhöhung dargestellt.

Nach Ablauf der ersten Zeitspanne 23 nach dem Zeitpunkt des Erstkontakts erhöht die Steuer- und Kontrolleinheit 9 die Anpresskraft 22 auf den Ziel-Hauptanpresskraftwert 26. Zwischenzeitlich hatte das betreffende Fahrzeug 18 ausreichend Zeit um voll einzufedern, wodurch eine entsprechend hohe Normalkraft bzw. dynamische Radlast auf den Vorderrädern 19 anliegt. Nun kann die volle Ziel-Hauptanpresskraftwert 26 aufgebracht werden, ohne dass es zu einem Blockieren der Bremse 2 bzw. des zu bremsenden Vorderrades 19 eines Fahrzeuges 18 kommt.

Die Dauer der ersten Zeitspanne 23 kann unterschiedlich bemessen bzw. bestimmt werden.

Da der Aufbau der endgültigen dynamischen Radlast einer Kurve folgt, kann auch die Steigerung der Anpresskraft einer Kurve folgen, die im Idealfall genauso verläuft wie die Änderung der dynamischen Radlast. In Fig. 4 ist entsprechend ein linearer Verlauf 27 der Anpresskraft 22 sowie ein kurvenförmiger Verlauf 28 gezeigt. Der Verlauf 28 folgt dabei einer Kurve mit hoher Anfangssteigung, wobei die Steigung zunehmend flacher wird. Ein Beispiel für einen derartigen Verlauf 28 ist ein Logarithmus.

Die genauen Verläufe 27, 28 werden natürlich von Bedingungen abhängen wie z.B. Fahrzeugbeladung und Straßenhaftung. Daher kann man vorteilhaft den konkreten Anfangsanpresskraftwert 25 und den Verlauf 27,28 z.B. vom Ziel-Hauptanpresskraftwert 26 abhängig machen, denn die Höhe des Ziel-Hauptanpresskraftwerts 26 wird das Ausmaß der Veränderung der dynamischen Radlastverteilung bestimmen. Man wird bei kleiner Ziel-Anpresskraft mit kaum einer Änderung der dynamischen Radlast rechnen und daher die Höhe des Anfangsanpresskraftwerts 25 und den Verlauf 27, 28 entsprechend wählen. Man kann dabei grob davon ausgehen, dass bei normalen PKWs die ruhende Radlastverteilung z.B. 50% vorne und 50% hinten sein könnte, abhängig von Beladung und Motor. Bei voll entwickelter Vollbremsung mit etwa 1g kann die dynamische Radlast auf ca. 70% bis 90% auf das Vorderrad wechseln. Daher kann man bei den üblichen Bremsungen mit g/4 bis g/3 von einer kaum vorhandenen Änderung durch die dynamische Radlastverlagerung ausgehen, wohl aber bei den Vollbremsungen, bei denen ja der Bremsweg wesentlich ist und eine hohe Stromaufnahme eintreten würde. In der Praxis wird man den Verlauf der Geraden 27 bzw. der Kurve 28 als Kompromiss über Einflussfaktoren wie Beladezustände auslegen.

Weiters kann vorgesehen sein, während eines starken dynamischen Radlastverlagerungsvorganges auch zuerst hinten stärker zu bremsen und mit zunehmender dynamischen Radlast vorne die hintere Bremswirkung abzusenken.

Als weiterer Aspekt wird für die genaue Festlegung des Verlaufes der Geraden 27 bzw. der Kurve 28 bevorzugt weiters der Stromverbrauch berücksichtigt. Also z.B. welche Stromerhöhung man zulässt um einen bestimmten Verlauf der Geraden 27 bzw. der Kurve 28 zu erreichen.

Man kann dabei auch die Gesamtstromaufnahme aller Bremsen des betreffenden Fahrzeuges berücksichtigen, da z.B. ein späteres Absenken einer Hinterradbremse durchaus als Generator wirken kann, wodurch Strom zur Betätigung einer Vorderradbremse erzeugt und in das Bordnetz eingespeist wird. Dabei ist nicht etwa sog. regeneratives Bremsen im Sinne von Batterieladen gemeint, sondern der Umstand, dass der Elektromotor 6 beim Lösen der Bremse 2 etwas Strom erzeugen kann.

Wenngleich im vorstehenden Absatz darauf hingewiesen wird, dass dabei kein regenerativer Bremsvorgang gemein ist, so ist die gegenständliche Bremsenanlage bzw. das entsprechende Verfahren auch besonders gut geeignet in Zusammenspiel mit einem regenerativen Bremsvorgang verwendet zu werden, da selbst bei praktisch voller Antriebsbatterie eines Elektrofahrzeuges, noch ein kurzer regenerativer Bremsimpuls in eine Batterie geladen werden kann. Dabei kann die bevorzugt schnelle Ansprache der Bremse 2 hinsichtlich eines schnellen Erreichens des Anfangsanpresskraftwerts 25 bevorzugt mit dem Generator als regenerativer Bremsvorgang durchgeführt werden. Weiters kann auch eine Steigerung entsprechend der Geraden 27 bzw. der Kurve 28 durch einen regenerativen Bremsvorgang unterstützt werden. Dadurch kann die Reaktionszeit der gegenständlichen Bremsenanlage 1 verringert werden, wodurch auch der Leistungsbedarf reduziert wird. Zu einer entsprechenden Abstimmung ist es lediglich erforderlich zu ermitteln, wie viel Bremsmoment der Generator unter welchen Bedingungen beitragen kann und der Rest muss von der Bremsenanlage 1 beigetragen werden, alles über den zeitlichen Verlauf gesehen.

Das langsamere Laufenlassen des Elektromotors 6 bewirkt natürlich, dass die selbe Klemmenergie auf eine längere Zeit verteilt wird und ist daher gemäß dieses Verfahrens ein geeignetes Mittel, um den Spitzenstrom zu senken. Weiters ergeben sich dadurch Möglichkeiten zur Umsetzung unterschiedlicher Verläufe der Geraden 27 bzw. der Kurve 28. All dies kann bei linear oder bei nicht-linear übersetzter Betätigungsmechanik 7 gleichermaßen verwendet werden.

Wie bereits beschrieben, kann bei linear übersetzter Betätigungsmechanik 7 sehr schnell ein Anfangsanpresskraftwert 25 erreicht werden, indem das Feld des Elektromotors 6 geschwächt wird oder Umschaltungen der Wicklungen am Elektromotor 6 vorgenommen werden.

Allerdings hat eine geringere Drehzahl des Elektromotors 6, wie dies bei einer konstanten Übersetzung der Betätigungsmechanik 7 erforderlich ist um unterschiedliche Geschwindigkeiten des Belagsträgers 4 zu realisieren, einen schlechten Wirkungsgrad zur Folge. Deshalb wird erneut und wiederholt auf die ganz besonderen Vorteile einer Betätigungsmechanik 7 mit nicht linearem Übersetzungsverhältnis hingewiesen, wodurch auch der Strom über die Betätigung weitgehend konstant bzw. in einem optimalen Wert gehalten werden kann, und die sonst auftretenden hohen Stromspitzen vor allem bei starken Bremsungen vermieden werden können.

Eine zusätzliche Ursache für Stromspitzen bei konventionellen Bremsen liegt in den Trägheitskräften, die zur Beschleunigung drehender Teile zu überwinden sind. Die hohe Differenz zwischen Soll- und Ist-Geschwindigkeit des Belagsträgers 4 am Beginn einer Bremsung, wobei es sich in der Regel um eine Beschleunigung des Belagsträgers 4 aus dem Stillstand handelt, veranlasst den Regler 10 des Elektromotors 6 dazu, den Elektromotor 6 mit dem maximalen Strom zu beaufschlagen. Dies verursacht sehr hohe Verluste und bringt keine entsprechenden Reaktionsvorteile für die Bremsenbetätigung.

In der gegenständlichen Bremsenanlage 1 wird dieses ungünstige Verhalten dadurch verhindert, dass in den entsprechenden Regelalgorithmen die Änderungsgeschwindigkeit der Soll-Stromaufnahme begrenzt wird. Dadurch wird die Regelung sehr einfach an die physikalische Realität angepasst. Es kommt damit zu keiner nennenswerten Verlangsamung der Betätigung, aber dem Elektromotor 6 steht, mit geringer Verzögerung, weiterhin das maximale Drehmoment zur Verfügung. Dies ist ein Vorteil im Vergleich zur generellen Begrenzung des Maximalstroms.

Als "optimal" wird bevorzugt ein Verhalten bzw. eine Steuerung angesehen, bei welchem nach den ersten 70ms nach Einleitung des Bremsvorganges bereits 30% bis 50% der Anpresskraft 22 anliegt, welche bei voll entwickelter dynamischer Radlastverteilung zum Blockieren des Rades erforderlich ist.

Bevorzugt kann als eindeutiges Gegenteil von "optimal", daher als suboptimal das Verhalten einer konventionellen Bremse ansehen werden, die über ca. 70ms kaum Klemmkraft entwickelt. Weiters suboptimal ist es, wenn das Rad zu früh so stark gebremst wird, wie dies erst bei voller dynamischer Radlastverteilung erfolgen sollte, wodurch es zum vorzeitigen Blockieren des Rades kommen kann.

Gemäß einer ersten besonders einfachen Variante ist vorgesehen, dass die erste Zeitspanne 23 ein konstanter Wert, insbesondere 200 bis 600 ms, vorzugsweise 300 bis 500 ms, ist, welcher in der Steuer- und Kontrolleinheit 9 gespeichert ist. Es hat sich gezeigt, dass bei einer bestimmten bzw. konkreten Bremsenanlage 1 in Zusammenwirken mit einer konkreten, zu bremsenden Vorrichtung ein konstanter Wert für die die erste Zeitspanne 23 ausgewählt werden kann, welcher ausreichend lange ist, um eine entsprechend hohe Normalkraft am Vorderrad 19 zu erreichen, und gleichzeitig nicht zu lange um den Bremsweg nicht zu verlängern. Allerdings sollte ein solcher konstanter Wert bei strukturellen Veränderungen am Fahrzeug 18, wie etwa dem Einbau eines steiferen Fahrwerks entsprechend angepasst werden.

Erfindungsgemäß ist vorgesehen, dass die Bremsenanlage 1 wenigstens einen Einfederungssensor 17, insbesondere umfassend wenigstens einen Beschleunigungssensor und/oder Lagesensor und/oder Längensensor, umfasst, welcher mit der Steuer- und Kontrolleinheit 9 verbunden ist. Der Einfederungssensor 17 kann etwa die Bewegung eines Fahrzeugchassis aufnehmen, oder beispielsweise direkt an einer Federung 21 des Vorderrades 19 angeordnet sein, und deren Verformung aufnehmen. Diesbezüglich sind viele unterschiedliche Ausführungen möglich. Die Dauer der ersten Zeitspanne 23 wird aufgrund der Einfederungsdaten des Einfederungssensors 17 durch die Steuer- und Kontrolleinheit 9 ermittelt. Dies kann etwa durch Vergleich der ermittelten Sensordaten mit wenigstens einem Grenzwert erreicht werden.

Bevorzugt ist weiters vorgesehen, dass die Steuer- und Kontrolleinheit 9 die Anpresskraft 22 nach Erreichen des Ziel-Hauptanpresskraftwerts 26 zur Kompensation von Fading-Effekten weiter erhöht. Sobald die Reibfläche 3 eine entsprechend hohe Temperatur aufweist, sinkt der Reibbeiwert und es ist erforderlich die Anpresskraft 22 zur Erhaltung einer bestimmten Verzögerungswirkung weiter zu erhöhen. Dies ist beispielhaft in Fig. 4 dargestellt.

Die gegenständlich beschriebene Bremsenanlage 1 ist insbesondere für den Einsatz in einem Fahrzeug 18 vorgesehen und auch in diesem Zusammenhang beschrieben. Dennoch kann diese Bremsenanlage 1 gänzlich unabhängig vom restlichen Fahrzeug umgesetzt werden, insofern keine fahrzeugseitigen Ressourcen erforderlich sind. Dadurch wird insbesondere der Einsatz in einfachen Fahrzeugen 18, wie etwa Anhängern unterstützt bzw. auch das Nachrüsten älterer Fahrzeuge ermöglich.

Moderne Straßenfahrzeuge weisen jedoch zahlreiche Sensoren und regelungstechnische Einrichtungen als Standard auf, welche sich dazu eignen für eine gegenständliche Bremsenanlage 1 verwendet zu werden. Da es sich dabei um Einrichtungen handelt, welche an sich Teil des betreffenden Fahrzeuges 18 sind, betrifft die gegenständliche Erfindung weiters ein Fahrzeug 18 mit wenigstens einem Vorderrad 19, wobei das Fahrzeug 18 wenigstens eine Anordnung 20 zum Erkennen eines Radschlupfes aufweist, wobei an dem Vorderrad 19 zum Bremsen des Vorderrads 19 eine elektromechanische Bremsenanlage 1 umfassend wenigstens eine elektromechanische Bremse 2, angeordnet ist, wobei die Bremse 2
- wenigstens eine Reibfläche 3,
- wenigstens einen Belagsträger 4 mit wenigstens einem Bremsbelag 5, und
- wenigstens einen Elektromotor 6 zum vorgebbaren Bewegen des Belagsträgers 4,
aufweist, wobei die Bremsenanlage 1 eine Steuer- und Kontrolleinheit 9 aufweist, welche mit der Anordnung 20 zum Erkennen eines Radschlupfes verbunden ist.

Die Steuer- und Kontrolleinheit 9 entspricht bis auf die erweiterten Funktionen der Steuer- und Kontrolleinheit 9 der bereits beschriebenen elektromechanischen Bremsenanlage 1.

Die Steuer- und Kontrolleinheit 9 ist dazu ausgebildet aus der Bremswirkungsanforderung einen Ziel-Hauptanpresskraftwert 26 für die Anpresskraft 22 zu ermitteln, wie dies bereits beschrieben ist.

Weiters erfolgt nach Herstellen eines Erstkontaktes des Bremsbelags 5 mit der Reibfläche 3 das Aufbringen der Anpresskraft 22 mit einer Anfangsanpresskraftwert 25. Dies dient der dynamischen Erhöhung einer Normalkraft auf das Vorderrad19. Dabei soll ein Schlupf am Vorderrad 19 vermieden werden, bzw. zumindest unter einem vorgebbaren Grenz-Schlupfwert gehalten werden. Da der Steuer- und Kontrolleinheit 9 die Daten der Anordnung 20 zum Erkennen eines Radschlupfes zur Verfügung stehen, kann der Anfangsanpresskraftwert 25 einfach anhand dieser Bedingung eingestellt werden. Dadurch ist auch ein Erhöhen des Anfangsanpresskraftwerts 25 entlang der Schlupfgrunze des Vorderrades möglich.

Die Anordnung 20 zum Erkennen eines Radschlupfes ist typischerweise Teil eines Anti-Blockier-Systems ABS des Fahrzeuges 18. Fig. 5 zeigt eine schematische Darstellung eines entsprechenden Fahrzeuges 18.

Nach Erreichen eines vorgebbaren Wertes der Normalkraft am Vorderrad 19 wird die Anpresskraft 22 auf einen Hauptanpresskraftwert 24 erhöht, welcher Hauptanpresskraftwert 24 an den Ziel-Hauptanpresskraftwert 26 herangeführt wird. Die Steuer- und Kontrolleinheit 9 versucht daher die Anpresskraft 22 auf den Ziel-Hauptanpresskraftwert 26 zu erhöhen. Allerdings wird dabei weiterhin das Kriterium berücksichtigt, dass möglichst kein Schlupf auftreten soll, weshalb gleichzeitig ein Schlupf am Vorderrad 19 unter dem vorgebbaren Grenz-Schlupfwert gehalten, insbesondere ganz vermieden, wird.

Dadurch können die Vorteile der bereits beschriebenen Bremsenanlage 1 noch besser erreicht werden, da aufgrund der verfügbaren und verwendeten Sensordaten eine genauere Regelung bzw. Steuerung des Bremsvorganges möglich ist.

Alle Ausführungen der anfangs beschriebenen elektromechanischen Bremsenanlage 1 sind ebenfalls bei dem Fahrzeug 18 mit der elektromechanischen Bremsenanlage 1 sowie der Anordnung 20 zum Erkennen eines Radschlupfes bevorzugt vorgesehen. Insbesondere ist vorgesehen, die Betriebsweise der anfangs beschriebenen elektromechanischen Bremsenanlage 1 mit konstanten Werten der ersten Zeitspanne 23 sowie den vorgegebenen Anfangsanpresskraftwert 25 und Ziel-Hauptanpresskraftwert 26 als Back-Up in das beschriebene Fahrzeug zu integrieren, etwa für den Fall eines Ausfalls der Anordnung 20 zum Erkennen eines Radschlupfes.

Im Anschluss wird eine bevorzugte Weiterbildung der gegenständlichen Bremsenanlage 1 bzw. des Fahrzeuges 18 beschrieben, welche jedoch auch ohne die besonderen Merkmale der gegenständlichen Bremsenanlage verwendet werden kann:
Besonders durch Elektrofahrzeuge, Fahrzeuge 18 mit zusätzlichen Bremsen wie Retardern (z.B. LKW, Busse) und modernen Fahrdynamiksystemen (z.B. ESC, Eelectronic stability control) kommen im Bereich der Interaktionsschnittstelle 16 und der Steuer- und Kontrolleinheit 9 zusätzliche Aufgaben hinzu: ESC ist z.B. eine zentrale Fahrzeugaufgabe, weil das Gesamtfahrzeug "wissen" kann, wie man eine Instabilität behebt, also wie z.B. ein bestimmtes Rad mehr und z.B. ein anderes weniger gebremst werden muss, um Stabilität zu fördern bzw. ob auch andere Eingriffe wie ein Lenkungseingriff oder eine Verstellung eines Stoßdämpfers durchgeführt wird.

Bei Fahrzeugen 18 mit zusätzlichen Bremsen (z.B. Generator eines Elektrofahrzeuges, Retardern) entsteht die sogenannte blending - Aufgabe: z.B. wird ein Gesamtbremsmoment pro Rad ermittelt (das sonst an die Reibungsbremse geleitet würde), aber es ist eine günstige Verteilung der Bremsmomente zu berücksichtigen, d.h. dass bevorzugt mit dem Generator gebremst wird und erst wenn dessen Wirkung nicht ausreicht die Reibungsbremse die fehlende Wirkung liefert. Diese Aufgabe, hier aus ESC und blendig beschrieben, wird hier als "Vehicle Dynamics" zusammengefasst, weil allgemein viele Aspekte berücksichtigt werden können, auch völlig neue wie z.B. ABS bevorzugt mit dem Generator zu machen.

Die hier empfohlene allgemeine Lösung ist also, dass eine "Vehicle Dynamics" Gesamtfunktion eingeführt wird, in der diese Aufgaben vereint sind. Da diese Funktion grundsätzlich zentral auf das Fahrzeug 18 wirkt, kann sie logischerweise außerhalb der Bremssteuerung und z.B. als Zentralfunktion bereits in der Interaktionsschnittstelle 16 implementiert werden. Bei einfacheren Fahrzeugen wird man aber keine zusätzliche "Vehicle Dynamis" einbauen wollen, sei es als zusätzlicher Rechner oder Funktion in einem Steuergerät, wie beispielsweise der Steuer- und Kontrolleinheit 9, und es gibt auch Stabilitätsaufgaben, die ganz oder teilweise lokal in einer Bremse 2 gelöst werden können. So könnte z.B. eine Bremse 2 ein blockiertes Rad wieder lösen (ABS), und das auch so langsam, dass der Fahrer eventuelle einseitige Wirkungen beherrschen kann.

Es wird hier also vorgeschlagen, dass man eine zentrale Funktion "Vehicle Dynamics" auch in der Steuer- und Kontrolleinheit 9 der Bremsenanlage 1 realisieren kann. Wenn bevorzugt diese "Vehicle Dynamics" das Gesamtwissen mitgeteilt bekommt, das sonst einer fahrzeugzentralen Funktion zur Verfügung stünde, kann die zentrale Funktion auch unterbleiben und statt dessen können z.B. Kopien der sonst zentralen Funktion in den Bremsen 2 implementiert werden.

Daher wird hier als vorteilhafte Lösung vorgeschlagen, dass die Steuer- und Kontrolleinheit 9 den hier vorgeschlagenen Verlauf der Geraden 27 bzw. der Kurve 28 ermittelt und zusätzlich eine "Vehicle Dynamics" der Steuer- und Kontrolleinheit 9 vorgeschaltet sein kann. An die Steuer- und Kontrolleinheit 9 würde nun also z.B. ein Fahrzeugverzögerungssignal gehen (z.B. im CAN Objekt 0x114). Dort können z.B. blending und Stabilitätsmaßnahmen getroffen werden und es werden die Radbremsmomente bzw. der Ziel-Hauptanpresskraftwert 26 ermittelt. Wobei auf jeden Fall die Werte für ein einzelnes Rad ermittelt werden aber bevorzugt aus Sicherheits- und Redundanzgründen auch die Bremsmomente bzw. Ziel-Hauptanpresskraftwerte 26 für die anderen Räder (da ja das zentrale Wissen für alle Räder hier bevorzugt vorliegt) und diese z.B. als augenblickliche Sollbremsmomente z.B. als CAN Objekte ab 0x115 mit für jedes Rad fortschreitender ID bis z.B. 0x11C im Gesamtbremssystem zur Verfügung gestellt werden. Die nicht das eigene Rad betreffenden Bremsmomente können zur Buslastbegrenzung natürlich mit geringerer Wiederholrate oder z.B. als Multiplexsignal gesendet werden. Bevorzugt wird jede Bremse 2 noch senden, welches Bremsmoment sie - entsprechend den vorliegenden Daten - eingestellt hat, oder anderweitig ermittelt oder gemessen hat. Dazu können z.B. CAN Objekte 0x151 bis z.B. 0x158 dienen. Darin können sich noch andere radindividuelle Daten befinden wie z.B. Raddrehzahl und Temperaturen (sich langsam verändernde Werte wiederum z.B. mit geringerer Widerholrate oder als Multiplexsignal). Alle genannten CAN Objekte werden bevorzugt noch z.B. eine Checksumme in ihren Nutzdaten übertragen, z.B. ein CRC byte und z.B. einen "alive-counter" in den Nutzdaten, damit Steuergeräte, wie eine Steuer- und Kontrolleinheit 9, sehen können, ob eine Übertragung eine Störwahrscheinlichkeit hat bzw. ob der Sender überhaupt neues erzeugt. Die Busse können natürlich auch andere sein wie z.B. Flex-ray, sie können aus redundanzgründen doppelt oder mehrfach vorhanden sein und verschiedene Strukturen haben wie Bus oder Stern. Diese CAN oder sonstigen Busse können natürlich wie üblich z.B. über "Inka" zur Parametrierung von Steuergeräten genutzt werden, zum Beobachten der Steuergerätezustände, zu Fehlerdiagnose oder zum "flashen" also programmieren.

Die genau gegensätzliche Variante wäre, dass das "Vehicle Dynamics" in die Interaktionsschnittstelle 16 implementiert wird und z.B. obige CAN Objekte nutzt, um die Bremse 2 mit augenblicklichen Bremsmomenten zu versorgen.

Sogar eine Mischvariante kann nach diesem Schema funktionieren: Ein Teil von "Vehicle Dynamics" wird in der Steuer- und Kontrolleinheit 9 in jeder Bremssteuerung implementiert. Wenn ein äußeres, hier noch nicht genanntes Steuergerät glaubt, eine Verbesserung der Stabilität bewirken zu können, könnte z.B. ein Lenkungssteuergerät in diesem Stabilitätsfall beginnen, radindividuelle Bremsmomente zu senden und die Berechnungen in der Steuer- und Kontrolleinheit 9 "over-rulen".

Natürlich kann die Bremsenanlage 1 bzw. die Bremse 2 gemäß Fig. 1 z.B. hardwaremäßig einmal pro Achse ausgebildet sein und trotzdem radindividuelles Verhalten bewirken. Auch ein Hardware-Gerät pro PKW wäre denkbar so wie z.B. ein Hardware-Gerät pro Radgruppe oder z.B. ein Hardware-Gerät pro Moped, Motorrad, Fahrrad, Fahrradanhänger oder Aufzugkabine usw.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Das Bindewort "oder" ist als inklusiv und nicht als exklusiv zu interpretieren. Sofern es sich aus dem Kontext nicht anders ergibt, umfasst "A oder B" auch "A und B", wobei "A" und "B" beliebige Merkmale darstellen.

Mittels eines ordnenden Zahlwortes, beispielweise "erster", "zweiter" oder "dritter", werden insbesondere ein Merkmal X bzw. ein Gegenstand Y in mehreren Ausführungsformen unterschieden, sofern dies nicht durch die Offenbarung der Erfindung anderweitig definiert wird. Insbesondere bedeutet ein Merkmal X bzw. Gegenstand Y mit einem ordnenden Zahlwort in einem Anspruch nicht, dass eine unter diesen Anspruch fallende Ausgestaltung der Erfindung ein weiteres Merkmal X bzw. einen weiteren Gegenstand Y aufweisen muss.

Ein "im Wesentlichen" in Verbindung mit einem Zahlenwert mitumfasst eine Toleranz von ± 10% um den angegebenen Zahlenwert, sofern es sich aus dem Kontext nicht anders ergibt.

Bei Wertebereichen sind die Endpunkte mitumfasst, sofern es sich aus dem Kontext nicht anders ergibt.

## Patentansprüche

1. Elektromechanische Bremsenanlage (1) umfassend wenigstens eine elektromechanische Bremse (2), wobei die Bremse (2)
- wenigstens eine Reibfläche (3),
- wenigstens einen Belagsträger (4) mit wenigstens einem Bremsbelag (5), und
- wenigstens einen Elektromotor (6) zum vorgebbaren Bewegen des Belagsträgers (4)
aufweist, wobei die Bremsenanlage (1) eine Steuer- und Kontrolleinheit (9) aufweist, wobei die Steuer- und Kontrolleinheit (9) dazu ausgebildet ist:
- eingangsseitig eine Bremswirkungsanforderung zu empfangen, und den Elektromotor (6) wenigstens mittelbar zum Erreichen einer vorgebbaren Anpresskraft (22) des Bremsbelags (5) auf die Reibfläche (3) anzusteuern,
- aus der Bremswirkungsanforderung einen Ziel-Hauptanpresskraftwert (26) der Anpresskraft (22) zu ermitteln,
- beginnend mit einem Erstkontakt des Bremsbelags (5) mit der Reibfläche (3) die Anpresskraft (22) auf einen Anfangsanpresskraftwert (25) in einem Bereich zwischen 25 - 60 % des Ziel-Hauptanpresskraftwerts (26) einzustellen,
- nach Ablauf einer ersten Zeitspanne (23) nach dem Erstkontakt die Anpresskraft (22) auf den Ziel-Hauptanpresskraftwert (26) zu erhöhen,
**dadurch gekennzeichnet, dass** die Bremsenanlage (1) wenigstens einen Einfederungssensor (17) umfasst, welcher mit der Steuer- und Kontrolleinheit (9) verbunden ist, und dass die Dauer der ersten Zeitspanne (23) aufgrund der Einfederungsdaten des Einfederungssensors (17) durch die Steuer- und Kontrolleinheit (9) ermittelt wird.

2. Elektromechanische Bremsenanlage nach Anspruch 1, **dadurch gekennzeichnet, dass** die Bremsenanlage (1) dazu ausgebildet ist, eine Bewegung des Belagsträgers (4) zur Überbrückung eines Luftspaltes (11) zwischen Bremsbelag (5) und Reibfläche (3) mit einer Beschleunigung im Bereich zwischen 70 - 100% einer Maximal-Beschleunigung und/oder 70 - 100% einer Maximal-Geschwindigkeit auszuführen.

3. Elektromechanische Bremsenanlage (1) nach Anspruch 2, **dadurch gekennzeichnet, dass** die Bremsenanlage (1) eine Betätigungsmechanik (7) aufweist, an welcher der Belagsträger (4) gelagert ist, und durch welche der Belagsträger (6) mit dem Elektromotor (6) verbunden ist, und dass die Betätigungsmechanik (7) ein nicht lineares Übersetzungsverhältnis aufweist, welches derart ausgebildet ist, dass eine konstante Drehzahl des Elektromotors (6) in eine hohe Wegänderung des Belagsträgers (4) im Luftspalt (11) umgesetzt wird, und die konstante Drehzahl in eine geringe Wegänderung des Belagsträgers (4) in einem Kontaktbereich des Bremsbelags (5) an der Reibfläche (3) umgesetzt wird.

4. Elektromechanische Bremsenanlage (1) nach Anspruch 2 oder 3, **dadurch gekennzeichnet, dass** die Steuer- und Kontrolleinheit (9) den Elektromotor (6) zur Überbrückung des Luftspaltes (11) mit hoher Drehzahl betreibt, insbesondere durch eine Feldschwächung beim Elektromotor (6).

5. Elektromechanische Bremsenanlage (1) nach einem der Ansprüche 1 bis 4, **dadurch gekennzeichnet, dass** der wenigstens eine Einfederungssensor (17) der Bremsanlage (1) wenigstens einen Beschleunigungssensor und/oder Lagesensor und/oder Längensensor umfasst.

6. Elektromechanische Bremsenanlage (1) nach einem der Ansprüche 1 bis 5, **dadurch gekennzeichnet, dass** die erste Zeitspanne (23) ein konstanter Wert, insbesondere 200 bis 600 ms, vorzugsweise 300 bis 500 ms, ist, welcher in der Steuer- und Kontrolleinheit (9) gespeichert ist.

7. Elektromechanische Bremsenanlage (1) nach einem der Ansprüche 1 bis 6, **dadurch gekennzeichnet, dass** die Steuer- und Kontrolleinheit (9) die Anpresskraft (22) innerhalb der ersten Zeitspanne (23) auf einen Wert zwischen 40 und 55% des Ziel-Hauptanpresskraftwerts (26) erhöht.

8. Elektromechanische Bremsenanlage (1) nach einem der Ansprüche 1 bis 7, **dadurch gekennzeichnet, dass** die Steuer- und Kontrolleinheit (9) die Anpresskraft (22) nach Erreichen des Ziel-Hauptanpresskraftwerts (26) zur Kompensation von Fading-Effekten weiter erhöht.

9. Fahrzeug (18) mit wenigstens einem Vorderrad (19), wobei an dem Vorderrad (19) zum Bremsen des Vorderrads (19) eine elektromechanische Bremsenanlage (1) nach einem der Ansprüche 1 bis 8 angeordnet ist.

10. Verfahren zum Betreiben einer elektromechanischen Bremsenanlage, umfassend wenigstens eine elektromechanische Bremse (2), wobei die Bremse (2)
- wenigstens eine Reibfläche (3),
- wenigstens einen Belagsträger (4) mit wenigstens einem Bremsbelag (5), und
- wenigstens einen Elektromotor (6) zum vorgebbaren Bewegen des Belagsträgers (4)
aufweist, wobei die Bremsenanlage (1) eine Steuer- und Kontrolleinheit (9) aufweist, wobei von der Steuer- und Kontrolleinheit (9)
- eingangsseitig eine Bremswirkungsanforderung empfangen wird, und von der Steuer- und Kontrolleinheit (9) der Elektromotor (6) wenigstens mittelbar zum Erreichen einer vorgebbaren Anpresskraft (22) des Bremsbelags (5) auf die Reibfläche (3) angesteuert wird,
- aus der Bremswirkungsanforderung ein Ziel-Hauptanpresskraftwert (26) der Anpresskraft (22) ermittelt wird,
- beginnend mit einem Erstkontakt des Bremsbelags (5) mit der Reibfläche (3) die Anpresskraft (22) auf einen Anfangsanpresskraftwert (25) in einem Bereich zwischen 25 - 60 % des Ziel-Hauptanpresskraftwerts (26) eingestellt wird, und
- nach Ablauf einer ersten Zeitspanne (23) nach dem Erstkontakt die Anpresskraft (22) auf den Ziel-Hauptanpresskraftwert (26) erhöht wird,
**dadurch gekennzeichnet, dass** die Bremsenanlage (1) wenigstens einen Einfederungssensor (17) umfasst, welcher mit der Steuer- und Kontrolleinheit (9) verbunden ist, und dass die Dauer der ersten Zeitspanne (23) aufgrund der Einfederungsdaten des Einfederungssensors (17) durch die Steuer- und Kontrolleinheit (9) ermittelt wird.

11. Fahrzeug (18) mit wenigstens einem Vorderrad (19), wobei das Fahrzeug (18) wenigstens eine Anordnung (20) zum Erkennen eines Radschlupfes aufweist, wobei an dem Vorderrad (19) zum Bremsen des Vorderrads (19) eine elektromechanische Bremsenanlage (1) umfassend wenigstens eine elektromechanische Bremse (2), angeordnet ist, wobei die Bremse (2)
- wenigstens eine Reibfläche (3),
- wenigstens einen Belagsträger (4) mit wenigstens einem Bremsbelag (5), und
- wenigstens einen Elektromotor (6) zum vorgebbaren Bewegen des Belagsträgers (4),
aufweist, wobei die Bremsenanlage (1) eine Steuer- und Kontrolleinheit (9) aufweist, wobei die Steuer- und Kontrolleinheit (9) dazu ausgebildet ist:
- eingangsseitig eine Bremswirkungsanforderung zu empfangen, und den Elektromotor (6) wenigstens mittelbar zum Erreichen einer vorgebbaren Anpresskraft des Bremsbelags (5) auf die Reibfläche (3) anzusteuern, und wobei die Steuer- und Kontrolleinheit (9) mit der Anordnung (20) zum Erkennen eines Radschlupfes verbunden ist,
- aus der Bremswirkungsanforderung einen Ziel-Hauptanpresskraftwert (26) für die Anpresskraft (22) zu ermitteln,
**dadurch gekennzeichnet, dass** die Steuer- und Kontrolleinheit (9) weiters dazu ausgebildet ist:
- beginnend mit einem Erstkontakt des Bremsbelags (5) mit der Reibfläche (3) die Anpresskraft (22) - zur dynamischen Erhöhung einer Normalkraft auf das Vorderrad (19) - auf einen Anfangsanpresskraftwert (25) einzustellen, wobei ein Schlupf am Vorderrad (19) unter einem vorgebbaren Grenz-Schlupfwert gehalten, insbesondere ganz vermieden, wird, und
- nach Erreichen eines vorgebbaren Wertes der Normalkraft am Vorderrad (19) die Anpresskraft (22) auf einen Hauptanpresskraftwert (24) zu erhöhen, welcher Hauptanpresskraftwert (24) an den Ziel-Hauptanpresskraftwert (26) herangeführt wird, wobei gleichzeitig ein Schlupf am Vorderrad (19) unter dem vorgebbaren Grenz-Schlupfwert gehalten, insbesondere ganz vermieden, wird.

12. Fahrzeug (18) nach Anspruch 11, **dadurch gekennzeichnet, dass** die Bremsenanlage (1) dazu ausgebildet ist, eine Bewegung des Belagsträgers (4) zur Überbrückung eines Luftspaltes (11) zwischen Bremsbelag (5) und Reibfläche (3) mit einer Beschleunigung im Bereich zwischen 70 - 100% einer Maximal-Beschleunigung und/oder 70 - 100% einer Maximal-Geschwindigkeit auszuführen.

13. Fahrzeug (18) nach Anspruch 11 oder 12, **dadurch gekennzeichnet, dass** das Fahrzeug (18) wenigstens einen Einfederungssensor (17), insbesondere umfassend wenigstens einen Beschleunigungssensor und/oder Lagesensor und/oder Längensensor, aufweist, welcher insbesondere im Bereich einer Vorderradfederung (21) des Fahrzeuges (18) angeordnet ist, und dass der Einfederungssensor (17) mit der Steuer- und Kontrolleinheit (9) zur Ermittlung der Normalkraft am Vorderrad (19) verbunden ist.

14. Fahrzeug (18) nach einem der Ansprüche 11 bis 13, **dadurch gekennzeichnet, dass** die Steuer- und Kontrolleinheit (9) die Anpresskraft (22) nach Erreichen des Ziel-Hauptanpresskraftwerts (26) zur Kompensation von Fading-Effekten weiter erhöht.

15. Verfahren zum Bremsen eines Fahrzeuges (18) mit wenigstens einem Vorderrad (19), wobei das Fahrzeug (18) wenigstens eine Anordnung (20) zum Erkennen eines Radschlupfes aufweist, wobei an dem Vorderrad (19) zum Bremsen des Vorderrads (19) eine elektromechanische Bremsenanlage (1) umfassend wenigstens eine elektromechanische Bremse (2), angeordnet ist, wobei die Bremse (2)
- wenigstens eine Reibfläche (3),
- wenigstens einen Belagsträger (4) mit wenigstens einem Bremsbelag (5), und
- wenigstens einen Elektromotor (6) zum vorgebbaren Bewegen des Belagsträgers (4),
aufweist, wobei die Bremsenanlage (1) eine Steuer- und Kontrolleinheit (9) aufweist, von welcher eingangsseitig eine Bremswirkungsanforderung empfangen wird, und von welcher der Elektromotor (6) wenigstens mittelbar zum Erreichen einer vorgebbaren Anpresskraft (22) des Bremsbelags (5) auf die Reibfläche (3) angesteuert wird, und wobei die Steuer- und Kontrolleinheit (9) mit der Anordnung (20) zum Erkennen eines Radschlupfes verbunden ist, wobei von der Steuer- und Kontrolleinheit (9) aus der Bremswirkungsanforderung einen Ziel-Hauptanpresskraftwert (26) für die Anpresskraft (22) ermittelt wird,
**dadurch gekennzeichnet, dass** von der Steuer- und Kontrolleinheit (9) weiters
- beginnend mit einem Erstkontakt des Bremsbelags (5) mit der Reibfläche (3) die Anpresskraft (22) - zur dynamischen Erhöhung einer Normalkraft auf das Vorderrad (19) - auf einen Anfangsanpresskraftwert (25) eingestellt wird, wobei ein Schlupf am Vorderrad (19) unter einem vorgebbaren Grenz-Schlupfwert gehalten, insbesondere ganz vermieden, wird, und
- nach Erreichen eines vorgebbaren Wertes der Normalkraft am Vorderrad (19) die Anpresskraft (22) auf einen Hauptanpresskraftwert (24) erhöht wird, welcher Hauptanpresskraftwert (24) an den Ziel-Hauptanpresskraftwert (26) herangeführt wird, wobei gleichzeitig ein Schlupf am Vorderrad (19) unter dem vorgebbaren Grenz-Schlupfwert gehalten, insbesondere ganz vermieden, wird.

## Claims

1. Electromechanical braking system (1) comprising at least one electromechanical brake (2), wherein the brake (2)
- at least one friction surface (3),
- at least one lining carrier (4) with at least one brake lining (5), and
- at least one electric motor (6) for movable movement of the lining carrier (4)
wherein the braking system (1) has a control and monitoring unit (9), wherein the control and monitoring unit (9) is embodied:
- receiving a braking effect request on the input side and controlling the electric motor (6) at least indirectly to achieve a predeterminable contact force (22) of the brake lining (5) on the friction surface (3),
- determining a target main contact force value (26) of the contact force (22) from the braking action request,
- starting with initial contact of the brake lining (5) with the friction surface (3), setting the contact force (22) to an initial contact force value (25) in a range between 25-60% of the target main contact force value (26),
- after a first period of time (23) has elapsed since the initial contact, increasing the contact force (22) to the target main contact force value (26),
**characterised in that** the braking system (1) comprises at least one pitching sensor (17) which is connected to the control and monitoring unit (9), and **in that** the duration of the first period of time (23) is determined by the control and monitoring unit (9) on the basis of the pitching data from the pitching sensor (17).

2. Electromechanical braking system according to claim 1, **characterised in that** the braking system (1) is embodied to move the lining carrier (4) to bridge an air gap (11) between the brake lining (5) and friction surface (3) with an acceleration in the range between 70-100% of a maximum acceleration and/or 70-100% of a maximum speed.

3. Electromechanical braking system (1) according to claim 2, **characterised in that** the braking system (1) has an actuating mechanism (7) on which the lining carrier (4) is mounted and by means of which the lining carrier (6) is connected to the electric motor (6), and that the actuating mechanism (7) has a non-linear transmission ratio, which is embodied in such a way that a constant speed of the electric motor (6) is converted into a large change in position of the lining carrier (4) in the air gap (11), and the constant rotational speed is converted into a small change in the position of the lining carrier (4) in a contact area of the brake lining (5) on the friction surface (3).

4. Electromechanical braking system (1) according to claim 2 or 3, **characterised in that** the control and monitoring unit (9) operates the electric motor (6) at high speed to bridge the air gap (11), in particular by field weakening in the electric motor (6).

5. Electromechanical braking system (1) according to one of claims 1 to 4, **characterised in that** the at least one pitching sensor (17) of the braking system (1) comprises at least one acceleration sensor and/or position sensor and/or length sensor.

6. Electromechanical braking system (1) according to one of claims 1 to 5, **characterised in that** the first period of time (23) is a constant value, in particular 200 to 600 ms, preferably 300 to 500 ms, which is stored in the control and monitoring unit (9).

7. Electromechanical braking system (1) according to one of claims 1 to 6, **characterised in that** the control and monitoring unit (9) increases the contact force (22) within the first period of time (23) to a value between 40 and 55% of the target main contact force value (26).

8. Electromechanical braking system (1) according to one of claims 1 to 7, **characterised in that** the control and monitoring unit (9) further increases the contact force (22) after the target main contact force value (26) has been reached in order to compensate for fading effects.

9. Vehicle (18) with at least one front wheel (19), wherein an electromechanical braking system (1) according to one of claims 1 to 8 is arranged on the front wheel (19) for braking the front wheel (19).

10. Method for operating an electromechanical braking system comprising at least one electromechanical brake (2), wherein the brake (2)
- has at least one friction surface (3),
- at least one lining carrier (4) with at least one brake lining (5), and
- at least one electric motor (6) for movable movement of the lining carrier (4)
wherein the braking system (1) has a control and monitoring unit (9), wherein the control and monitoring unit (9)
- a braking effect request is received on the input side, and the electric motor (6) is controlled by the control and monitoring unit (9) at least indirectly to achieve a predeterminable contact force (22) of the brake lining (5) on the friction surface (3),
- a target main contact force value (26) of the contact force (22) is determined from the braking action request,
- starting with initial contact of the brake lining (5) with the friction surface (3), the contact force (22) is set to an initial contact force value (25) in a range between 25-60% of the target main contact force value (26), and
- after a first period of time (23) has elapsed after the initial contact, the contact force (22) is increased to the target main contact force value (26),
**characterised in that** the braking system (1) comprises at least one pitching sensor (17) which is connected to the control and monitoring unit (9), and that the duration of the first period of time (23) is determined by the control and monitoring unit (9) on the basis of the pitching sensor (17) data.

11. Vehicle (18) with at least one front wheel (19), wherein the vehicle (18) has at least one arrangement (20) for detecting wheel slip, wherein an electromechanical braking system (1) comprising at least one electromechanical brake (2) is arranged on the front wheel (19) for braking the front wheel (19) (2) is arranged on the front wheel (19) for braking the front wheel (19), wherein the brake (2) comprises
- at least one friction surface (3),
- at least one lining carrier (4) with at least one brake lining (5), and
- at least one electric motor (6) for movable movement of the lining carrier (4),
wherein the braking system (1) has a control and monitoring unit (9), wherein the control and monitoring unit (9) is embodied:
- receiving a braking effect request on the input side and controlling the electric motor (6) at least indirectly to achieve a predeterminable contact force of the brake lining (5) on the friction surface (3), and wherein the control and monitoring unit (9) is connected to the arrangement (20) for detecting wheel slip,
- determining a target main contact force value (26) for the contact force (22) from the braking effect request,
**characterised in that** the control and monitoring unit (9) is further embodied:
- starting with initial contact of the brake lining (5) with the friction surface (3), to set the contact force (22) - for dynamically increasing a normal force on the front wheel (19) - to an initial contact force value (25), whereby slip at the front wheel (19) is kept below a predeterminable limit slip value, in particular completely avoided, and
- after reaching a predeterminable value of the normal force at the front wheel (19), to increase the contact force (22) to a main contact force value (24), which main contact force value (24) is brought closer to the target main contact force value (26), whereby at the same time slip at the front wheel (19) is kept below the presettable limit slip value, in particular is completely avoided.

12. Vehicle (18) according to claim 11, **characterised in that** the braking system (1) is embodied to move the lining carrier (4) to bridge an air gap (11) between the brake lining (5) and friction surface (3) with an acceleration in the range between 70-100% of a maximum acceleration and/or 70-100% of a maximum speed.

13. Vehicle (18) according to claim 11 or 12, **characterised in that** the vehicle (18) has at least one pitching sensor (17), in particular comprising at least one acceleration sensor and/or position sensor and/or length sensor, which is arranged in particular in the area of a front wheel suspension (21) of the vehicle (18), and that the pitching sensor (17) is connected to the control and monitoring unit (9) for determining the normal force on the front wheel (19).

14. Vehicle (18) according to any one of claims 11 to 13, **characterised in that** the control and monitoring unit (9) further increases the contact force (22) after the target main contact force value (26) has been reached in order to compensate for fading effects.

15. Method for braking a vehicle (18) with at least one front wheel (19), wherein the vehicle (18) has at least one arrangement (20) for detecting wheel slip, wherein an electromechanical braking system (1) comprising at least one electromechanical brake (2) is arranged on the front wheel (19) for braking the front wheel (19), wherein the brake (2) comprising
- at least one friction surface (3),
- at least one lining carrier (4) with at least one brake lining (5), and
- at least one electric motor (6) for movable lining carrier (4),
wherein the braking system (1) has a control and monitoring unit (9) from which a brake application request is received on the input side and from which the electric motor (6) is at least indirectly controlled to achieve a predetermined contact force (22) of the brake lining (5) on the friction surface (3), and wherein the control and monitoring unit (9) is connected to the arrangement (20) for detecting wheel slip, wherein the control and monitoring unit (9) determines a target main contact force value (26) for the contact force (22) from the brake application request,
**characterised in that** the control and monitoring unit (9) further
- starting with initial contact of the brake lining (5) with the friction surface (3), sets the contact force (22) - for dynamically increasing a normal force on the front wheel (19) - is set to an initial contact force value (25), whereby slip on the front wheel (19) is kept below a predeterminable limit slip value, in particular is completely avoided, and
- after a predeterminable value of the normal force on the front wheel (19) is increased to a main contact force value (24), which main contact force value (24) is brought to the target main contact force value (26), whereby at the same time slip at the front wheel (19) is kept below the preselectable limit slip value, in particular completely avoided.

## Revendications

1. Système de freinage électromécanique (1) comprenant au moins un frein électromécanique (2), le frein (2) comportant
- au moins une surface de friction (3),
- au moins un support de garniture (4) avec au moins une garniture de frein (5), et
- au moins un moteur électrique (6) pour déplacer de manière prédéfinie le support de garniture (4),
le système de freinage (1) comportant une unité de commande et de contrôle (9), l'unité de commande et de contrôle (9) étant conçue pour :
- recevoir en entrée une demande d'action de freinage et commander au moins indirectement le moteur électrique (6) afin d'obtenir une force de pression (22) prédéfinie de la garniture de frein (5) sur la surface de friction (3),
- déterminer, à partir de la demande d'action de freinage, une valeur cible de force de pression principale (26) de la force de pression (22),
- à partir d'un premier contact de la garniture de frein (5) avec la surface de friction (3), régler la force de pression (22) sur une valeur de force de pression initiale (25) comprise entre 25 et 60 % de la valeur de force de pression principale cible (26),
- après écoulement d'un premier intervalle de temps (23) après le premier contact, augmenter la force de pression (22) jusqu'à la valeur cible de la force de pression principale (26),
**caractérisé en ce que** le système de freinage (1) comprend au moins un capteur de compression (17) qui est relié à l'unité de commande et de contrôle (9), et **en ce que** la durée du premier intervalle de temps (23) est déterminée par l'unité de commande et de contrôle (9) sur la base des données de compression du capteur de compression (17).

2. Système de freinage électromécanique selon la revendication 1, **caractérisé en ce que** le système de freinage (1) est conçu pour déplacer le support de garniture (4) afin de combler un espace d'air (11) entre la garniture de frein (5) et la surface de friction (3) avec une accélération comprise entre 70 et 100 % d'une accélération maximale et/ou entre 70 et 100 % d'une vitesse maximale.

3. Système de freinage électromécanique (1) selon la revendication 2, **caractérisé en ce que** le système de freinage (1) comprend un mécanisme d'actionnement (7) sur lequel est monté le support de garniture (4) et par lequel le support de garniture (6) est relié au moteur électrique (6), et **en ce que** le mécanisme d'actionnement (7) présente un rapport de transmission non linéaire, qui est conçu de telle sorte qu'une vitesse de rotation constante du moteur électrique (6) est convertie en une variation importante de la course du support de garniture (4) dans l'entrefer (11) et que la vitesse de rotation constante est convertie en une faible variation de course du support de garniture (4) dans une zone de contact de la garniture de frein (5) sur la surface de friction (3).

4. Système de freinage électromécanique (1) selon la revendication 2 ou 3, **caractérisé en ce que** l'unité de commande et de contrôle (9) fait fonctionner le moteur électrique (6) à une vitesse de rotation élevée pour combler l'entrefer (11), en particulier par un affaiblissement du champ du moteur électrique (6).

5. Système de freinage électromécanique (1) selon l'une des revendications 1 à 4, **caractérisé en ce que** le ou les capteurs de compression (17) du système de freinage (1) comprennent au moins un capteur d'accélération et/ou un capteur de position et/ou un capteur de longueur.

6. Système de freinage électromécanique (1) selon l'une des revendications 1 à 5, **caractérisé en ce que** le premier intervalle de temps (23) est une valeur constante, en particulier de 200 à 600 ms, de préférence de 300 à 500 ms, qui est enregistrée dans l'unité de commande et de contrôle (9).

7. Système de freinage électromécanique (1) selon l'une des revendications 1 à 6, **caractérisé en ce que** l'unité de commande et de contrôle (9) augmente la force de pression (22) pendant le premier intervalle de temps (23) jusqu'à une valeur comprise entre 40 et 55 % de la valeur cible de la force de pression principale (26).

8. Système de freinage électromécanique (1) selon l'une des revendications 1 à 7, **caractérisé en ce que** l'unité de commande et de contrôle (9) augmente encore la force de pression (22) après avoir atteint la valeur cible de la force de pression principale (26) afin de compenser les effets de fading.

9. Véhicule (18) comportant au moins une roue avant (19), un système de freinage électromécanique (1) selon l'une des revendications 1 à 8 étant disposé sur la roue avant (19) pour freiner la roue avant (19).

10. Procédé pour faire fonctionner un système de freinage électromécanique comprenant au moins un frein électromécanique (2), le frein (2) comportant
- au moins une surface de friction (3),
- au moins un support de garniture (4) avec au moins une garniture de frein (5), et
- au moins un moteur électrique (6) pour déplacer de manière prédéfinie le support de garniture (4),
le système de freinage (1) comportant une unité de commande et de contrôle (9), l'unité de commande et de contrôle (9) reçoit
- une demande d'action de freinage côté entrée, et l'unité de commande et de contrôle (9) commande au moins indirectement le moteur électrique (6) afin d'obtenir une force de pression (22) prédéfinie de la garniture de frein (5) sur la surface de friction (3),
- une valeur cible de force de pression principale (26) de la force de pression (22) est déterminée à partir de la demande d'action de freinage,
- à partir du premier contact de la garniture de frein (5) avec la surface de friction (3), la force de pression (22) est réglée sur une valeur de force de pression initiale (25) comprise entre 25 et 60 % de la valeur cible de force de pression principale (26), et
- après écoulement d'un premier intervalle de temps (23) après le premier contact, la force de pression (22) est augmentée jusqu'à la valeur cible de la force de pression principale (26),
**caractérisé en ce que** le système de freinage (1) comprend au moins un capteur de compression (17) qui est relié à l'unité de commande et de contrôle (9), et **en ce que** la durée du premier intervalle de temps (23) est déterminée par l'unité de commande et de contrôle (9) sur la base des données de compression du capteur de compression (17).

11. Véhicule (18) comportant au moins une roue avant (19), le véhicule (18) comportant au moins un dispositif (20) pour détecter un patinage de roue, un système de freinage électromécanique (1) comprenant au moins un frein électromécanique (2) étant disposé sur la roue avant (19) pour freiner la roue avant (19), (2) est disposé sur la roue avant (19) pour freiner la roue avant (19), le frein (2) comportant
- au moins une surface de friction (3),
- au moins un support de garniture (4) avec au moins une garniture de frein (5), et
- au moins un moteur électrique (6) pour déplacer de manière prédéfinie le support de garniture (4),
le système de freinage (1) comportant une unité de commande et de contrôle (9), l'unité de commande et de contrôle (9) étant conçue pour :
- recevoir en entrée une demande d'action de freinage et commander au moins indirectement le moteur électrique (6) afin d'obtenir une force de pression prédéfinie de la garniture de frein (5) sur la surface de friction (3), et l'unité de commande et de contrôle (9) étant reliée au dispositif (20) destiné à détecter un patinage des roues,
- à déterminer, à partir de la demande d'action de freinage, une valeur cible de force de pression principale (26) pour la force de pression (22),
**caractérisée en ce que** l'unité de commande et de contrôle (9) est en outre conçue pour :
- à partir d'un premier contact de la garniture de frein (5) avec la surface de friction (3), régler la force de pression (22) - afin d'augmenter de manière dynamique une force normale sur la roue avant (19) - à une valeur de force de pression initiale (25), un glissement de la roue avant (19) étant maintenu en dessous d'une valeur de glissement limite prédéfinie, voire totalement évité, et
- une fois qu'une valeur prédéfinie de la force normale sur la roue avant (19), augmenter la force de pression (22) à une valeur de force de pression principale (24), laquelle valeur de force de pression principale (24) est amenée à la valeur de force de pression principale cible (26), tout en maintenant simultanément un glissement sur la roue avant (19) en dessous de la valeur de glissement limite prédéfinie, en particulier en l'évitant complètement.

12. Véhicule (18) selon la revendication 11, **caractérisé en ce que** le système de freinage (1) est conçu pour déplacer le support de garniture (4) afin de combler un espace d'air (11) entre la garniture de frein (5) et la surface de friction (3) avec une accélération comprise entre 70 et 100 % d'une accélération maximale et/ou entre 70 et 100 % d'une vitesse maximale.

13. Véhicule (18) selon la revendication 11 ou 12, **caractérisé en ce que** le véhicule (18) comporte au moins un capteur de suspension (17), comprenant en particulier au moins un accéléromètre et/ou un capteur de position et/ou un capteur de longueur, qui est notamment disposé dans la zone d'une suspension avant (21) du véhicule (18), et **en ce que** le capteur de suspension (17) est relié à l'unité de commande et de contrôle (9) pour déterminer la force normale sur la roue avant (19).

14. Véhicule (18) selon l'une des revendications 11 à 13, **caractérisé en ce que** l'unité de commande et de contrôle (9) augmente encore la force de pression (22) après avoir atteint la valeur cible de la force de pression principale (26) afin de compenser les effets de fading.

15. Procédé de freinage d'un véhicule (18) comportant au moins une roue avant (19), le véhicule (18) comportant au moins un dispositif (20) pour détecter un patinage de roue, un système de freinage électromécanique (1) comprenant au moins un frein électromécanique (2) étant disposé sur la roue avant (19) pour freiner la roue avant (19), le frein (2)
- au moins une surface de friction (3),
- au moins un support de garniture (4) avec au moins une garniture de frein (5), et
- au moins un moteur électrique (6) pour déplacer de manière prédéfinie le support de garniture (4),
le système de freinage (1) comportant une unité de commande et de contrôle (9) qui reçoit en entrée une demande d'action de freinage et à partir de laquelle le moteur électrique (6) est commandé au moins indirectement pour atteindre une force de pression (22) prédéfinie de la garniture de frein (5) sur la surface de friction (3), et l'unité de commande et de contrôle (9) étant reliée au dispositif (20) de détection d'un patinage des roues, l'unité de commande et de contrôle (9) déterminant, à partir de la demande d'action de freinage, une valeur cible de force de pression principale (26) pour la force de pression (22),
**caractérisé en ce que** l'unité de commande et de contrôle (9)
- à partir d'un premier contact de la garniture de frein (5) avec la surface de friction (3), règle la force de pression (22) - afin d'augmenter de manière dynamique une force normale sur la roue avant (19) - à une valeur de force de pression initiale (25), un glissement sur la roue avant (19) étant maintenu en dessous d'une valeur de glissement limite prédéfinie, voire totalement évité, et
- après avoir atteint une valeur prédéfinie de la force normale sur la roue avant (19), la force de pression (22) est augmentée jusqu'à une valeur de force de pression principale (24), laquelle valeur de force de pression principale (24) est rapprochée de la valeur de force de pression principale cible (26), le glissement au niveau de la roue avant (19) étant simultanément maintenu en dessous de la valeur de glissement limite prédéfinie, voire totalement évité.
